# FASCICULE DE BREVET EUROPEEN

(11) **EP 0 567 392 B1**
(45) Date de publication et mention de la délivrance du brevet: **06.12.1995**
(21) Numéro de dépôt: 93401023.2
(22) Date de dépôt: 21.04.1993
(51) Int. Cl.: F16J 15/32

(54) **Joint annulaire à brosse**
Ringförmige Bürstendichtung
Annular brush seal

(30) Priorité: 23.04.1992 FR 9204985
(43) Date de publication de la demande: 27.10.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Veau, Albert Léon Pierre, F-77380 Combs la Ville (FR)

(56) Documents cités:
- EP-A- 0 293 140
- WO-A-86/05252
- DE-C- 4 029 010

## Description

### DOMAINE DE L'INVENTION

L'invention concerne l'étanchéité entre deux volumes gazeux soumis à des pressions différentes et situés autour d'un élément rotatif. On rencontre un tel besoin d'étanchéité dans la construction des turboréacteurs pour l'aéronautique.

### ART ANTERIEUR ET PROBLEME POSE

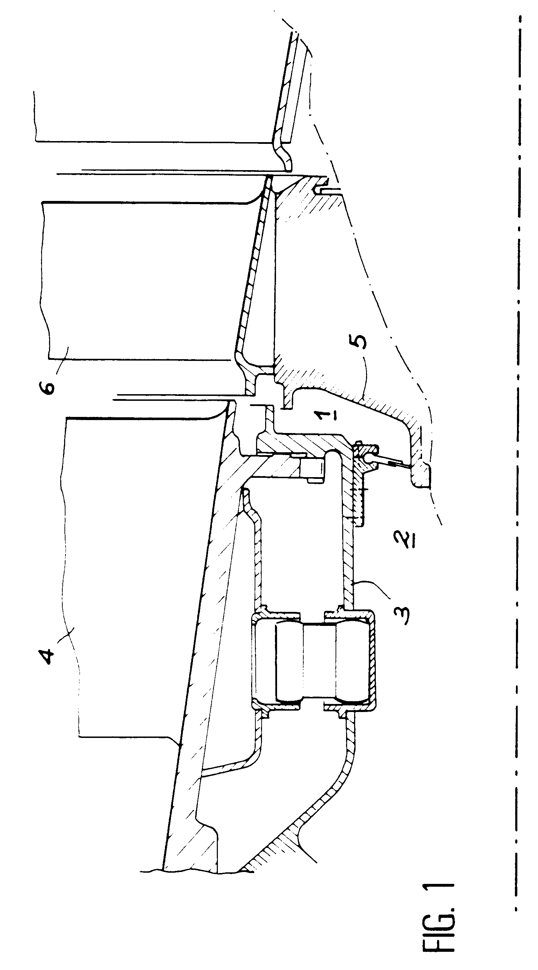

En référence à la figure 1, dans certains types de turboréacteurs, on éprouve le besoin d'assurer l'étanchéité entre deux chambres annulaires 1, 2 délimitées, par exemple, par une cloison 3 du distributeur de turbine 4 qui est fixe et une cloison 5 du rotor de turbine 6 qui tourne autour de l'axe principal du turboréacteur. Bien entendu, la cloison 5 du rotor 6 tourne par rapport à la cloison 3 du distributeur de turbine 4.

Il est connu d'utiliser un joint du type labyrinthe pour assurer l'étanchéité entre ces deux enceintes 1 et 2. Toutefois, un tel type de joint est encombrant et la dilatation radiale différentielle importante existant entre la partie mobile (rotor) et la partie fixe (stator) a pour conséquence des fuites importantes à certains régimes de rotation et une usure importante dans le temps de ce type de joint, d'où une perte de performance due au manque d'étanchéité entre les deux enceintes 1 et 2.

Par contre, on connaît par le brevet ROLLS-ROYCE GB-1 598 926, un joint du type "brosse" constitué principalement d'un faisceau de fibres ou fils placé perpendiculairement à un arbre et à une distance minimale de celui-ci pour que les extrémités des fibres ou fils affleurent juste l'arbre autour duquel le joint doit être monté, de manière à assurer l'étanchéité de part et d'autre de ce joint. Le faisceau de fils est maintenu par deux flasques solidarisés à un support fixe.

Avec ce type de joint, l'étanchéité peut être réalisée de façon excellente, sous réserve que l'arbre tourne parfaitement rond, c'est-à-dire qu'aucune excentration ne puisse se produire vis-à-vis de la rotation de cet arbre. En effet, si l'arbre comporte un balourd ou tourne avec une excentration prononcée, le contact quasi permanent entre l'arbre et l'extrémité des fibres du joint à brosse fait travailler celles-ci au flambage et entraîne les effets suivants :
- détérioration prématurée de l'extrémité souple de chaque fibre du joint à brosse par écrasement ;
- échauffement ultrarapide de la zone de contact entre le joint et l'arbre (cet échauffement limité à la largeur approximative du joint est d'autant plus grand que la vitesse de rotation de l'arbre est élevée).

Le but de l'invention est de remédier à ces inconvénients ou de retarder au maximum la détérioration des fibres du joint à brosse et l'échauffement produit par le contact.

### RESUME DE L'INVENTION

A cet effet, l'objet principal de l'invention est un joint annulaire à brosse destiné à assurer l'étanchéité entre deux volumes annulaires délimités par un arbre d'axe déterminé et autour duquel est monté un stator, un mouvement de rotation autour dudit axe ayant lieu entre l'arbre et le stator. Ce joint comprend principalement :
- un corps de brosse annulaire constitué de deux flasques et monté dans le stator ; et
- des fibres montées par une première extrémité dans le corps de brosse de manière inclinée par rapport à l'axe de l'arbre et orientées vers l'arbre pour que leur deuxième extrémité affleure l'arbre de manière à créer un rideau étanche entre les deux volumes annulaires.

Selon l'invention, le corps de brosse est constitué de plusieurs secteurs de couronne montés dans le stator, de manière à permettre aux fibres de s'écarter légèrement de l'arbre en s'inclinant par rapport à l'axe de l'arbre, de façon à autoriser une excentration de l'arbre par rapport au stator tout en assurant l'étanchéité entre les deux volumes annulaires.

De préférence, dans la conception du corps de brosse, chaque secteur annulaire possède une tête à une première extrémité montée chacune dans une gorge cylindrique du stator, de manière à permettre un mouvement de rotation du corps de brosse par rapport à l'arbre pour obtenir un écartement des fibres par rapport à l'arbre.

Les secteurs du corps de brosse sont de préférence réalisés au moyen de deux flasques placés l'un contre l'autre.

Cette réalisation principale se complète avantageusement par des recouvrements sur un des deux flasques chevauchant ainsi deux secteurs adjacents pour assurer la continuité de l'étanchéité du joint.

Les secteurs sont avantageusement maintenus en place par un jonc élastique, tendu contre une deuxième extrémité du corps de brosse opposé à la tête pour maintenir les secteurs du corps de brosse serrés les uns contre les autres dans une position de repos dans laquelle les fibres sont le moins incliné possible par rapport à un plan radial de l'axe de l'arbre.

D'autre part, par le document de brevet européen EP-A-0 293 140, on connaît un joint à brosse dont les fibres ou les poils sont inclinés radialement. En d'autres termes, ils ne sont pas perpendiculaires à la surface de l'arbre sur lequel ils frottent.

Dans une réalisation avantageuse de l'invention, les fibres sont inclinées dans le sens de rotation de l'arbre.

Le joint à brosse selon l'invention est particulièrement efficace lorsqu'on dispose deux butées en rotation placées sur le stator pour limiter la rotation des secteurs du corps de brosse.

### LISTE DES FIGURES

L'invention et ses différentes caractéristiques techniques seront mieux comprises à la lecture de la description suivante, annexée des quelques figures représentant respectivement :
- figure 1, un exemple d'utilisation du joint à brosse selon l'invention dans un turboréacteur ;
- figures 2A et 2B, en coupe, deux positions du joint à brosse selon l'invention ;
- figure 3, en vue frontale, le joint à brosse selon l'invention autour d'un arbre ;
- figure 4, une coupe transversale d'un secteur du joint à brosse selon l'invention.

### DESCRIPTION DETAILLEE D'UN MODE DE REALISATION DE L'INVENTION

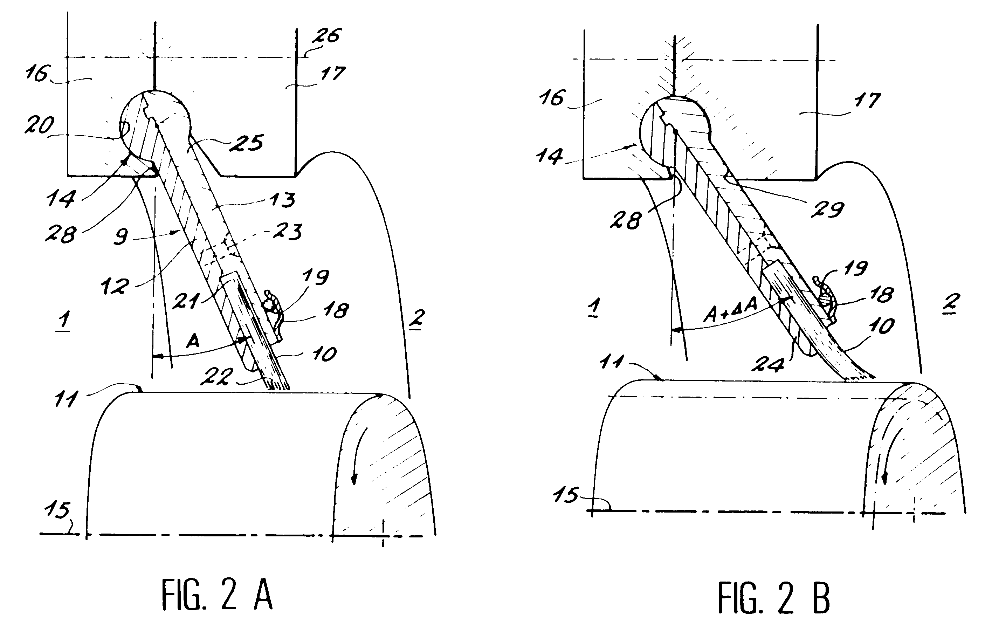

En référence aux figures 2A et 2B, le joint annulaire à brosse selon l'invention comprend principalement un corps de brosse 9 sur lequel est fixé un faisceau de fibres 10 (fils, poils, ou autres éléments filiformes). Ce joint est représenté à côté d'un arbre rotatif 11 pouvant tourner autour de son axe longitudinal de rotation 15. D'autre part, le joint est monté sur un stator. Ce dernier est constitué sur la réalisation représentée par deux flasques fixes 16 et 17. Une première extrémité 21 des fibres 10 est placée dans le corps de brosse 9. Une deuxième extrémité 22 des fibres 10 est placée contre la surface extérieure de l'arbre 11 de manière à affleurer cette dernière.

On conçoit ainsi que le joint à brosse puisse constituer une cloison étanche entre une première zone annulaire 1 et une deuxième zone annulaire 2 délimitées par l'arbre rotatif 11 et le support représenté par les deux flasques fixes 16 et 17.

Dans le cadre de l'invention, le joint à brosse est incliné par rapport aux plans radiaux ou perpendiculaires à l'axe longitudinal 15 de l'arbre 11. En d'autres termes, sur ces deux figures 2A et 2B, le joint à brosse n'est pas vertical.

Selon l'invention, le corps 9 du joint à brosse est monté de manière à pouvoir pivoter légèrement par rapport au stator. De ce fait, les fibres 10 constituant le faisceau de la brosse peuvent s'écarter ou se rapprocher plus ou moins de la surface externe de l'arbre rotatif 11, grâce à ce pivotement. On comprend donc qu'il est possible aux joints à brosse de s'adapter à chaque instant aux éventuels différents rayons instantanés de l'arbre rotatif 11 en regard du faisceau de fibres 10. Ainsi, s'il existe un balourd ou une excentration lors de la rotation de cet arbre 11, le joint à brosse peut ainsi s'adapter par un léger pivotement à cette petite variation de rayon.

Les deux figures 2A et 2B montrent les deux positions extrêmes du joint à brosse. On voit sur la figure 2A que l'inclinaison du corps 9 par rapport à l'axe vertical de la figure fait un angle A. Les deuxièmes extrémités 22 des fibres 10 touchent alors à peine la surface externe de l'arbre 11.

Sur la figure 2B, l'inclinaison du corps de brosse 9 avec le même axe vertical fait un angle A+ ΔA. En effet, le corps de brosse 9 à pivoter et les deuxièmes extrémités 22 des fibres 10 sont encore en contact avec la surface externe de l'arbre 11, puisque celle-ci a évolué en position en direction du joint sous l'effet d'une excentration de l'arbre 11. En d'autres termes, ce dernier a repoussé les fibres 10 du joint à brosse. Le contact a lieu entre le joint à brosse et l'arbre 11 ; en conséquence, l'étanchéité entre les deux volumes 1 et 2 est conservé, malgré une différence de pression régnant entre ceux-ci.

On voit sur ces deux figures 2A et 2B, dans une réalisation possible du corps de brosse 9, que ce dernier est constitué de deux flasques 12 et 13 plaqués l'un contre l'autre, au moyen par exemple de vis de fixation 23. La première extrémité 21 des fibres 10 du faisceau est prisonnière de la deuxième extrémité 24 des deux flasques 12 et 13.

Par la première extrémité 25, le corps de brosse 9 est monté pivotant dans le stator grâce à une tête 14. Cette dernière constitue une sorte de rotule et peut être constituée de deux parties hémisphériques constitutives respectivement des deux flasques 12 et 13. En correspondance, est prévue une gorge 20 dans le stator. Ce dernier, peut être constitué de deux flasques de fixation 16 et 17 assemblés par des goujons symbolisés par un axe de fixation 26.

Du fait que le joint à brosse est annulaire, c'est-à-dire qu'il entoure complètement l'arbre 11, on peut comprendre que ce joint à brosse ne puisse pas pivoter s'il est constitué d'une seule pièce rigide. En effet, le pivotement symbolisé par les deux figures 2A et 2B impose un changement de diamètre sensible de la deuxième extrémité 24 du corps de brosse 9, ce qui ne peut pas avoir lieu, sauf si le corps de brosse 9 est constitué d'un matériau très déformable. En conséquence, selon l'invention, le corps de brosse 9 du joint est constitué de plusieurs secteurs de corps de brosse.

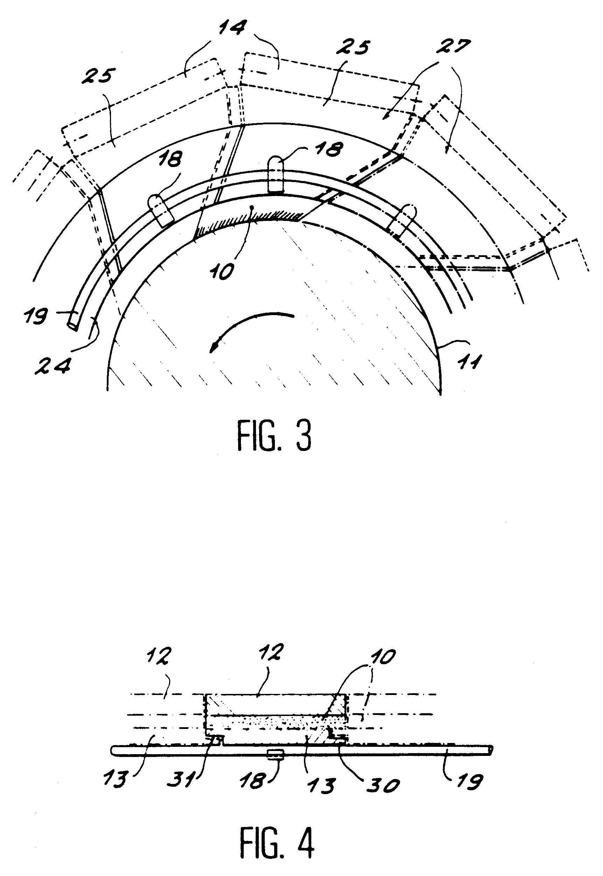

Comme le montre la figure 3, les secteurs 27 du corps de brosse sont répartis autour de l'arbre 11 d'une manière analogue aux pétales d'une fleur. La rotation de chacun des secteurs 27 est obtenue grâce au fait que la gorge référencée 20 sur les figures précédentes est constituée en fait de plusieurs secteurs cylindriques creux, chaque secteur correspondant à un secteur 27 du corps de brosse, et plus précisément à un secteur de tête 14. Ainsi, chaque secteur 27 du corps de brosse peut pivoter par rapport au stator.

Pour limiter le débattement du pivotement des secteurs 27 du corps de brosse 9 par rapport au stator, chacun des deux flasques 16 et 17 de ce dernier possède une surface inclinée respectivement 28 et 29 à la base de la gorge 20.

Le joint à brosse selon l'invention est prévu pour fonctionner entre deux volumes 1 et 2 pour lesquels la pression régnant dans le volume 2 est supérieure à la pression régnant dans le volume 1. En conséquence, en fonctionnement normal, le joint est plaqué contre la butée 28 du flasque de fixation 16 dans la position représentée par la figure 2A. On précise qu'un jeu calculé peut être prévu dans cette position entre l'extrémité des fibres 10 et de la surface externe de l'arbre 11.

Pour assurer cette position des fibres 10 par rapport à la surface externe de l'arbre 11, il est nécessaire de maintenir les différents secteurs 27 dans la position la moins inclinée du corps de brosse 9 représentée par la figure 2A. Un moyen d'obtenir ce maintien consiste à utiliser un jonc 19 appliqué à la deuxième extrémité 24 des secteurs 27 du corps de brosse 9. Comme le montrent les figures 3 et 2A, on peut utiliser à cet effet des oeillets 18 ouverts et légèrement élastiques pour permettre l'introduction du jonc 19 à l'intérieur. On peut prévoir ainsi un oeillet 18 sur chacun d'un des deux flasques 13 de chaque secteur 27 du corps de brosse 9.

Sur la figure 3, on constate que les fibres 10 sont inclinées dans le sens de rotation de l'arbre 11, c'est-à-dire qu'ils ne sont pas perpendiculaires à la surface externe de ce dernier. Ceci favorise les contacts des extrémités des fibres 10 sur cette surface et limite l'usure du joint.

Si comme le montre la figure 2B, une excentration de l'arbre 11 a lieu, ce dernier a tendance à repousser les fibres 10. Les différents secteurs 27 du joint se déploient alors autour de l'arbre 11 au fur et à mesure du passage de l'excentration. L'élasticité du jonc 19 et sa relative mobilité dans les oeillets de fixation 18 permettent à la fois le déploiement de chaque secteur 27 au point haut de l'excentration et leur rappel vers l'arbre 11 au point bas de cette excentration. La butée 28 peut alors permettre de respecter l'éventuel jeu minimal prévu entre l'extrémité des fibres 10 et de l'arbre 11.

Comme le montre la figure 4, un des deux flasques 13 du corps de brosse 9 peut comporter un recouvrement 30 dépassant par rapport à l'autre flasque 12 pour venir s'encastrer dans un décrochement 31 correspondant du flasque 13 du secteur voisin. On peut ainsi assurer l'étanchéité complète du joint lors des différents déplacements des secteurs 27 les uns par rapport aux autres. On place de préférence ces recouvrements 30 du côté où la pression exercée sur le joint est la plus forte. Du fait de l'inclinaison des fibres 10 du joint dans le sens de rotation de l'arbre 11, la continuité de l'étanchéité est assurée. En effet, quand les segments 17 s'ouvrent, les fibres 10 restent en contact entre eux.

### AVANTAGES DE L'INVENTION

Le joint annulaire à brosse apporte différents avantages.
- Une meilleure souplesse de contact est obtenue entre le joint lui-même et l'arbre 11, d'où une meilleure dissipation calorifique sur ce dernier.
- On élimine le flambage lié à la perpendicularité des fibres 10 du joint vis-à-vis de la surface extérieure de l'arbre rotatif 11. On prolonge ainsi la durée de vie du joint.
- En cas de détérioration accidentelle d'un secteur 27 du joint, ce dernier peut être remplacé tout en conservant les autres secteurs.
- Bien entendu, l'étanchéité entre les deux zones à séparer est maintenue malgré une excentration de l'arbre.

## Revendications

1. Joint annulaire à brosse destiné à assurer l'étanchéité entre deux volumes annulaires (1, 2) délimités par un arbre rotatif (5, 11) d'axe déterminé (15) et un stator (3, 16, 17), un mouvement de rotation autour de l'axe (15) ayant lieu entre l'arbre (11) et le stator (3, 16, 17), comportant :
- un corps de brosse (9) constitué de plusieurs secteurs de couronne (27) montés dans le stator (3, 6, 17) ; et
- des fibres (10) montées dans le corps de brosse (9) de manière inclinée par rapport à l'axe (15) de l'arbre (11) et fixées par leurs premières extrémités (21) dans le corps de brosse (9) et orientées vers l'arbre (11) pour que leur deuxième extrémité (22) affleure l'arbre (11) de manière à créer un rideau étanche entre les deux volumes annulaires (1, 2), caractérisé en ce que les secteurs de couronne (27) sont montés pivotant de manière à permettre aux fibres (10) de s'écarter légèrement de l'arbre (11) en s'inclinant par rapport à l'axe de rotation (15) de l'arbre (11), de façon à autoriser une excentration de l'arbre (5, 11) par rapport au stator (3, 16, 17) tout en assurant l'étanchéité entre les deux volumes annulaires (1, 2).

2. Joint annulaire à brosse selon la revendication 1, caractérisé en ce que le corps de brosse (9) et chaque secteur (27) possèdent une tête (14) à une première extrémité (25), chaque tête (14) étant montée dans une gorge cylindrique (20) du stator (3, 16, 17), de manière à permettre le mouvement d'inclinaison de chaque secteur (27) du corps de brosse (9) par rapport à l'arbre (11) pour obtenir l'écartement des fibres (10) par rapport à l'arbre (11).

3. Joint annulaire à brosse selon la revendication 1 ou 2, caractérisé en ce que le corps de brosse (9) est constitué de deux flasques (12, 13) appliqués l'un contre l'autre.

4. Joint annulaire à brosse selon la revendication 3, caractérisé en ce qu'un des deux flasques (13) de chaque secteur (27) possède un recouvrement (30) chevauchant ainsi le flasque (13) du secteur adjacent (27) pour assurer la continuité de l'étanchéité.

5. Joint annulaire à brosse selon la revendication 4, caractérisé en ce qu'il comprend un jonc (19) élastique, et tendu contre une deuxième extrémité (24) du corps de brosse (9) opposée à la tète (14) de ce dernier pour maintenir les secteurs (27) du corps de brosse (9) serrés les uns contre les autres dans une position de repos dans laquelle les fibres (10) sont le moins incliné possible par rapport à un plan radial à l'axe de rotation (15) de l'arbre (11).

6. Joint annulaire à brosse selon l'une quelconque des revendications précédentes, caractérisé en ce que les fibres (10) sont inclinées dans le sens de rotation de l'arbre (11).

7. Joint annulaire à brosse selon la revendication 2, caractérisé en ce que le carter (3, 16, 17) possède deux butées en rotation (28, 29) pour limiter le mouvement de rotation des secteurs (27).

## Patentansprüche

1. Ringförmige Bürstendichtung zur Abdichtung zwischen zwei ringförmigen Volumen (1, 2), die von einer drehenden Welle (5, 11) mit bestimmter Achse (15) und einem Stator (3, 16, 17) begrenzt werden, wobei zwischen der Welle (11) und dem Stator (3, 16, 17) eine Drehbewegung um die Achse (15) stattfindet,
mit einem Bürstenkörper (9), der aus mehreren in dem Stator (3, 16, 17) montierten Ringsektoren (27) besteht,
und mit Fasern (10), die relativ zu der Achse (15) der Welle (11) geneigt in dem Bürstenkörper (9) montiert und mit ihren ersten Enden (21) in dem Bürstenkörper (9) fixiert sind und die in Richtung auf die Welle (11) orientiert sind, so daß ihr zweites Ende (22) an der Welle (11) anliegt und zwischen den beiden ringförmigen Volumen (1, 2) ein Dichtungsgürtel gebildet wird,
**dadurch kennzeichnet,**
daß die Ringsektoren (27) schwenkbar montiert sind, so daß die Fasern (10) sich von der Welle (11) leicht entfernen können, indem sie sich relativ zur Drehachse (15) der Welle (11) neigen, so daß sie eine Exzentrizität der Welle (5, 11) relativ zu dem Stator (3, 16, 17) zulassen, während sie die Abdichtung zwischen den beiden ringförmigen Volumen (1, 2) gewährleisten.

2. Ringförmige Bürstendichtung nach Anspruch 1, dadurch kennzeichnet, daß der Bürstenkörper (9) und jeder Ringsektor (27) an einem ersten Ende (25) einen Kopf (14) haben und daß jeder dieser Köpfe (14) in einer zylindrischen Kehle (20) des Stators (3, 16, 17) so montiert ist, daß er die Neigungsbewegung der einzelnen Ringsektoren (27) des Bürstenkörpers (9) relativ zu der Welle (11) ermöglicht, so daß die Fasern (10) sich von der Welle (11) entfernen können.

3. Ringförmige Bürstendichtung nach Anspruch 1 oder 2, dadurch kennzeichnet, daß der Bürstenkörper (9) aus zwei gegeneinander gepreßten Flanschen (12, 13) besteht.

4. Ringförmige Bürstendichtung nach Anspruch 3, dadurch kennzeichnet, daß einer (13) der beiden Flansche jedes Sektors (27) eine Abdeckung (30) besitzt und so den Flansch (13) des benachbarten Sektors (27) überlappt, um die Kontinuität der Abdichtung sicherzustellen.

5. Ringförmige Bürstendichtung nach Anspruch 4, kennzeichnet durch einen Federring (19), der gegen ein dem Kopf (14) des Bürstenkörpers (9) entgegengesetztes zweites Ende (24) des Bürstenkörpers (9) gespannt ist, um die Sektoren (27) des Bürstenkörpers (9) in einer Ruheposition gegeneinander gepreßt zu halten, in der die Fasern (10) die kleinstmögliche Neigung gegenüber einer zur Drehachse (15) der Welle (11) radialen Ebene haben.

6. Ringförmige Bürstendichtung nach einem der vorhergehenden Ansprüche, dadurch kennzeichnet, daß die Fasern (10) in Drehrichtung der Welle (11) geneigt sind.

7. Ringförmige Bürstendichtung nach Anspruch 2, dadurch kennzeichnet, daß das Gehäuse (3, 16, 17) zwei Drehanschläge (28, 29) zur Begrenzung der Schwenkbewegung der Sektoren (27) besitzt.

## Claims

1. An annular brush seal for ensuring fluid tightness between two annular volumes (1, 2) bounded by a rotary shaft (5, 11) having a predetermined axis (15) and by a stator (3, 16, 17), rotation around the axis (15) occurring between the shaft (11) and the stator (3, 16, 17)), comprising:
a brush body (9) consisting of a plurality of ring sectors (27) disposed in the stator (3, 16, 17) and
fibres (10) disposed in the brush body (9) at an inclination to the shaft axis (15) and fixed at their first ends (21) in the brush body (9) and so oriented towards the shaft (11) that their second end (22) wipes the shaft (11) so as to produce a fluid-tight curtain between the two annular volumes (1, 2),
characterised in that the ring sectors (27) are pivotally mounted so as to enable the fibres (10) to separate slightly from the shaft (11) by inclining relatively to the rotational axis (15) so that the shaft (5, 11) can take up a position eccentric of the stator (3, 16,17) while ensuring fluid tightness between the two annular volumes (1, 2)

2. An annular brush seal according to claim 1, chaacterised in that the brush body (9) and each sector (27) have a head (14) at a first end (25), each head (14) being so disposed in a cylindrical groove (20) of the stator (3, 16, 17) that each sector (27) of the brush body (9) can incline relatively to the shaft (11) in order to separate the fibres (10) from the shaft (11).

3. An annular brush seal according to claim 1 or 2, characterised in that the brush body (9) consists of two plates (12, 13) applied to one another.

4. An annular brush seal according to claim 3, characterised in that one (13) of the two plates of each sector has an overlap (30) overlapping the plate (13) of the adjacent sector (27) to ensure continuity of fluid tightness.

5. An annular brush seal according to claim 4, characterised in that it comprises a resilient retaining ring (19) tightened against a second end (24) of the brush body (9), the latter end being the end remote from the brush body head (14), in order to maintain the brush body sectors (27) clamped together in a normal position in which the fibres are at their least possible inclination to a plane extending radially of the rotational axis (15) of the shaft (11)

6. An annular brush seal according to any one of the previous claims, characteriseed in that the fibres (10) are inclined in the direction of shaft rotation.

7. An annular brush seal according to claim 2, characterised in that the casing (3, 16, 17) has two rotation stops (28, 29) for limiting rotation of the sectors (27).
